# EUROPEAN PATENT APPLICATION

(11) **EP 4 530 982 A1**
(43) Date of publication of application: **02.04.2025**
(21) Application number: 24186060.0
(22) Date of filing: 02.07.2024
(51) Int. Cl.: G06T 7/50, G06V 10/24, G06V 10/44, G06V 10/764, G06V 10/80, G06V 10/82, G06V 20/58

(54) **CROSS-DOMAIN SPATIAL MATCHING FOR MONOCULAR 3D OBJECT DETECTION AND/OR LOW-LEVEL SENSOR FUSION**

(30) Priority: 05.07.2023 US 202363512045 P; 27.06.2024 US 202418756419
(71) Applicant: Aptiv Technologies AG, 8200 Schaffhausen (CH)
(72) Inventor: Dworak, Daniel, 30-605 Kraków (PL); Komorkiewicz, Mateusz, 30-798 Kraków (PL)
(74) Representative: Manitz Finsterwald Patent- und Rechtsanwaltspartnerschaft mbB

(57) **Abstract**

A method of performing Cross-Domain Spatial matching (CDSM) for monocular object detection in 3D free space surrounding a vehicle includes receiving into an image processing network, from a camera of the vehicle, at least one input image, determining from the input image, a set of 2D image features of potential targets in surrounding the vehicle, transforming the set of 2D image features into a set of 3D image features of the potential targets by aligning a lateral axis and a vertical axis of the 2D image features with, respectively, a tensor height axis and a tensor width axis of a 3D birds eye view grid, applying a CDSM aggregation to the 3D image features to extrapolate depth information, and generating a set of aggregated 3D features to the potential targets, and detecting, based on the aggregated 3D features, one or more objects associated with the potential targets.

## Description

### CROSS-REFERENCE TO RELATED APPLICATIONS

This application claims the benefit of U.S. Provisional Application No. 63/512,045 filed on July 5, 2023. The entire disclosure of the above application is incorporated herein by reference.

### FIELD

The present disclosure relates to techniques for performing Cross-Domain Spatial matching (CDSM) for monocular three-dimensional (3D) object detection and/or low-level sensor fusion (e.g., camera and radar fusion.

### BACKGROUND

A challenge encountered when detecting monocular objects in 3D space is the absence of a third dimension or depth information within a single image, which is represented by pixels in a two-dimensional (2D) space. Without information about the third dimension, accurate localization and understanding of objects in the 3D space, from processing 2D images only is difficult. There have been a number of approaches to addressing this issue. Some approaches are targets at enhancing the performance and reliability of monocular object detection.

One approach to address the lack of depth information in monocular object detection is to decouple the 2D and 3D parameters and predict them separately. Instead of using bounding boxes, CenterNet, for example, predicts only the center of the object, while regressing other properties, such as, depth, 3D dimensions, and rotation angles relative to that key center point. Another approach is called FCOS3D. In this example, a set of predefined 3D locations in the image are maintained to perform 2D centeredness predictions. In this approach, the image is projected back to a two-and-one-half-dimensional (2.5D) space having 2D based locations and their corresponding predicted depths. The remaining parameters are also regressed in 3D space to generate the final object prediction.

Another previous method treats the problem as a depth estimation problem with a solution derived from a single image. Referred to as PGD this other method performs depth estimation of 2D image pixels as a distribution, incorporating a probabilistic representation to capture uncertainty. Additionally, a geometric relation graph is utilized to improve estimation by considering contextual connections between 3D objects. EPro-PnP is another method, adopts the Perspective-n-Points (PnP) approach. This solves the pose from a set of 3D points in object space and their corresponding 2D projections in image space. EPro-PnP proposes a differentiable layer using the PnP approach, which trains the network in an end-to-end manner to learn weighted 2D-3D point correspondences. The output is interpreted as a probabilistic distribution, applicable for 3D object detection.

In other examples include transformer-based vision networks, such as BEVFormer, used to predict 3D objects from 2D images. BEVFormer learns unified birds-eye-view (BEV) representations by utilizing spatial and temporal information through predefined grid-shaped BEV queries on image features. BEVFormer predictions are currently in use by the NuScenes 3D object detection benchmark. However, current implementations of these and similar transformers are computationally intensive and not yet suitable for embedded deployments (e.g., on embedded computers or controllers in vehicles).

Fusion algorithms are employed to enhance the performance of an advanced vehicle perception systems. Fusion algorithms combine data from individual sensors and generate a final perception outcome. The fusion process leverages advantageous aspects of each sensor and aims to achieve a more robust result. Additionally, the fusion algorithm provides an added layer of safety in scenarios involving partial sensor blockage or other failure modes. By relying on more reliable sensor readings, it can help mitigate potential hazards.

Fusion algorithms can be categorized as either high-level or low-level. In high-level fusion, information about detected objects from separate sensors is fused at the object level. Low-level fusion operates closer to the raw input data, utilizing information directly from each sensor's data stream. The key distinction between the two lies in their operational stage. High-level fusion works with already processed sensor detections, while low-level fusion works with the raw or minimally processed data streams themselves. Consequently, low-level fusion neural networks can potentially identify patterns in cross-sensor data that may not be accessible at a higher level (e.g., object level). However, due to significant differences in sensor reading domains (e.g., image camera 2D view versus a point cloud 3D surrounding view), correlating or combining those two sources of information together presents a number of challenges.

Existing methods like AVOD, MV3D, and PointFusion attempt different multi-view approaches with complex domain mapping techniques. Newer methods such as CenterFusion and FUTR3D include different architectures where the fusion is done on a camera image processed similarly to the CenterNet vision-only model approach, but with additional information from radar detections. First, a 2D center point and object features are predicted in the image, which is then associated with extracted radar features via the Frustum association mechanism. The fusion of two sensor feature maps leads to final 3D predictions.

Existing sensor fusion methods are computationally expensive to be implemented in certain systems. Existing methodologies to deriving 3D data from 2D images may be far too complex and not suitable for embedded implementations where computing resources (e.g., processor bandwidth, memory) may be limited such as in a vehicle.

### SUMMARY

This section provides a general summary of the disclosure, and is not a comprehensive disclosure of its full scope or all of its features.

A computer-implemented method of a vehicle system for performing Cross-Domain Spatial matching (CDSM) for monocular object detection in 3D free space of a physical environment surrounding a vehicle in accordance with the present disclosure includes receiving into an image processing network, from a camera of the vehicle, at least one input image including a 2D array of pixel information of the physical environment, determining, from the 2D array of pixel information of the input image, a set of 2D image features of potential targets in the physical environment, transforming the set of 2D image features into a set of 3D image features of the potential targets by applying a CDSM rotation to the 2D image features that aligns a lateral axis and a vertical axis of the 2D image features with, respectively, a tensor height axis and a tensor width axis of a 3D birds eye view (BEV) grid, and by applying a CDSM aggregation to the 3D image features to extrapolate depth information for a tensor channel axis that is normal to the tensor width axis and the tensor height axis, and generating a set of aggregated 3D features to the potential targets including the depth information extrapolated for the tensor channel axis, and detecting, based on the aggregated 3D features, one or more objects associated with the potential targets.

In other features, a determination is made that at least one of the one or more objects lies along a travel path of a vehicle.

In other features the vehicle is controlled to avoid a collision with the at least one of the one or more objects.

In other features, receiving the at least one input image includes centering a cartesian global camera coordinate system (GCCS) on a camera sensor field of view of the camera.

In other features, the GCCS includes an X-axis defined along a vehicle travel path and Y-axis that is orthogonal to the X-axis, the Y-axis defining a width of the vehicle, and a Z-axis that define the tensor channel axis.

In other features, the tensor height axis corresponds to the X-axis of the GCCS and the tensor width axis corresponds to the Y-axis of the GCCS.

In other features, applying the CDSM rotation to the 2D image features includes aligning the 2D image features with the GCCS by rotating the 2D image features about the Z-axis a first distance and rotating the GCCS about the Y-axis a second distance.

In other features, 2D convolutional layers are applied to the BEV grid to generate refined 2D image features and the refined 2D image features are passed to 3D prediction head to process the refined 2D image features into 3D image features.

A computer system for performing Cross-Domain Spatial matching (CDSM) for monocular object detection in 3D free space of a physical environment surrounding a vehicle in accordance with the present disclosure includes an image processing network for receiving into a network backbone, from a camera of the vehicle, at least one input image including a 2D array of pixel information of the physical environment; a bidirectional feature pyramid network for determining, from the 2D array of pixel information of the input image, a set of 2D image features of potential targets in the physical environment, and a CDSM system for transforming the set of 2D image features to a set of 3D image features of the potential targets by applying a CDSM rotation to the 2D image features that aligns a lateral axis and a vertical axis of the 2D image features with, respectively, a tensor height axis and a tensor width axis of a 3D birds eye view (BEV) grid, and by applying a CDSM aggregation to the 3D image features to extrapolate depth information for a tensor channel axis that is normal to the tensor width axis and the tensor height axis.

In other features, the CDSM system generates a set of aggregated 3D features of the potential targets including the depth information extrapolated for the tensor channel axis, and detects, based on the aggregated 3D features, one or more objects associated with the potential targets.

In other features, a point cloud processing network connected to at least one of a lidar system and a radar system, the point cloud processing system receiving from the at least one of the lidar system and the radar system, 3D point cloud data representing a physical environment around the vehicle.

In other features, a voxel feature extractor (VFE) is coupled to the point cloud processing network, the point cloud processing network and the VFE generating a plurality of 3D feature maps of the physical environment around the vehicle.

In other features, the CDSM system fuses the 2D image features with the 3D feature maps in a CDSM fusion block to generate the set of aggregated 3D features of the potential targets.

In other features, the CDSM system generates a unified output prediction in the BEV grid of the potential targets.

In other features, the CDSM system aligns spatial information in a first domain representing the 2D image features with spatial information in a second domain in a CDSM alignment block, that is distinct from the first domain, representing the 3D feature maps to fuse the 2D image features with the 3D feature maps.

In other features, the CDSM system determines that at least one of the one or more objects associated with the potential targets lies along a travel path of a vehicle.

In other features, the CDSM system controls the vehicle to avoid a collision with the at least one of the one or more objects.

In other features, the CDSM system centers cartesian global camera coordinate system (GCCS) on a camera sensor field of view of the camera when receiving the at least one input image into the network backbone.

In other features, the CDSM system defines the GCCS as an X-axis extending along a vehicle travel path and Y-axis defining a width of the vehicle that is orthogonal to the X-axis, and a Z-axis that defines the tensor channel axis.

In other features, the tensor height axis in the CDSM corresponds to the X-axis of the GCCS and the tensor width axis in the CDSM corresponds to the Y-axis of the GCCS.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations and are not intended to limit the scope of the present disclosure.
Figure 1 depicts a computing system that implements a cross-domain spatial matching (CDSM) system for monocular 3D object detection, in accordance with a non-limiting example;
Figure 2 is a block diagram depicting a system for implementing CDSM for monocular object detection for a vehicle, in accordance with a non-limiting example;
Figure 3 depicts an input image for the computing system of FIG. 1 including bounding boxes drawn around four potential targets near a vehicle as well as a bird's eye view (BEV) grid illustrating the potential targets detections based on Karlsruhe Institute of Technology and Toyota Technological Institutes of Chicago (KITTI) data sets, in accordance with a non-limiting example;
Figure 4 depicts an input image for the computing system of FIG. 1 including bounding boxes drawn around four potential targets near a vehicle as well as a bird's eye view (BEV) grid illustrating the potential targets detections based on NuScenes data sets, in accordance with a non-limiting example;
Figure 5 depicts a computing system that implements a cross-domain spatial matching (CDSM) system ow level sensor fusion, in accordance with a non-limiting example;
Figure 6 depicts an input model including image portions and pointcloud portions for the CDSM system, in accordance with a non-limiting example;
Figure 7 depicts additional fusion techniques the CDSM system, in accordance with a non-limiting example;
Figure 8 depicts a network that implements CDSM fusion that fuses aligned CDSM features from different sensors into a fused output, in accordance with a non-limiting example;
Figure 9 illustrates a CDSM fusion output result from the CDSM system, in accordance with a non-limiting example;
Figure 10 illustrates another CDSM fusion output result from the CDSM system, in accordance with a non-limiting example;
Figure 11 is a block diagram depicting a vehicle including a CDSM system, in accordance with a non-limiting example; and
Figure 12 depicts a flowchart illustrating a method for performing monocular 3D object detection and/or low-level CDSM sensor fusion, in accordance with a non-limiting example.

Corresponding reference numerals indicate corresponding parts throughout the several views of the drawings.

### DETAILED DESCRIPTION

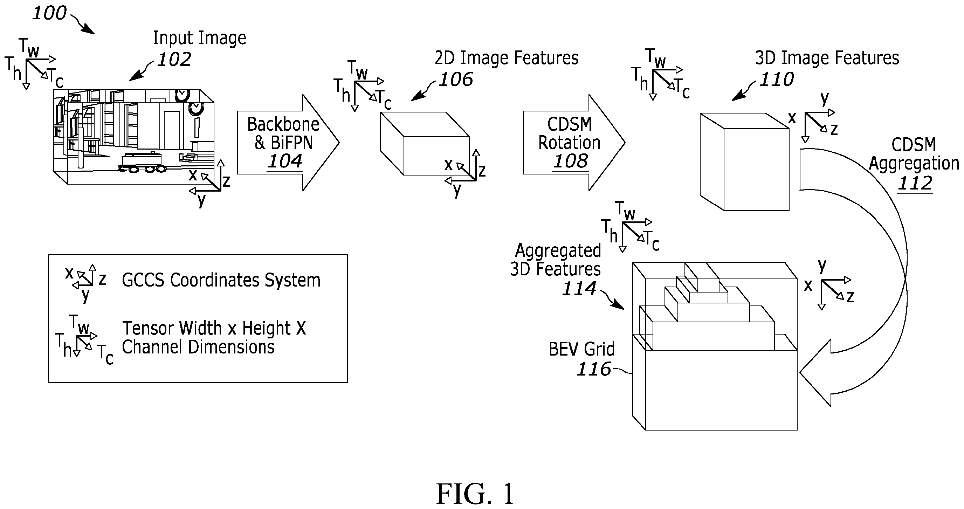

Figure 1 illustrates a computing system 100 that implements a CDSM layer approach for visual sensor data interpretations. A 3D Global Camera Coordinate System (GCCS) and tensor dimension indicators are shown in Figure 1 to aid in understanding. The computing system 100 represents a layer or part of a computer model or network that executes on a processor (e.g., an embedded vehicle system) to perform object detection functions for a vehicle or other embedded system application. For example, a processor, controller, or computing system on a vehicle may execute a computer model or artificial neural network that includes the unique CDSM transformation layer illustrated in Figure 1.

As indicated above, CDSM techniques can be used to overcome differences in coordinate systems between a 2D model architecture and a desired 3D domain. As illustrated, the computing system 100 receives image data from a camera on a vehicle. For example, at least one input image 102 is received from a camera of a vehicle including a 2D array of pixel information of a physical environment surrounding the vehicle. In some examples, a right-hand side, Cartesian 3D GCCS is centered on a camera sensor field of view. The X-axis may point forward (e.g., in the direction of the vehicle travel), the Y-axis points to the left of the camera, and the Z-axis is orthogonal to the XY plane (e.g., above and below the camera center line of sight). The tensors of the 3D prediction grid, such as a Birds-Eye-View (BEV) grid 116, are aligned with the GCCS, where the tensor height dimension corresponds to the GCCS X-axis, the tensor width corresponds to the GCCS Y-axis, and the tensor channels correspond to the GCCS Z-axis.

From the 2D array of pixel information of the at least one input image 102, a set of 2D image features 106 to potential targets in physical environment may be determined. The 2D image features 106 are extracted from the input images 102 by a backbone and BiFPN (Bidirectional Feature Pyramid Network) block 104. The block 104 is configured to process the at least one input image using the backbone and a plurality of feature pyramid network (FPN) sub-networks or subnets. For instance, the at least one input image are fed to the FPN subnets of the block 104, which extract a 2D feature map based on the at least one input image. The 2D image-based feature map is output as a set of 2D image features 106 identified from the at least one input image.

The two dimensions of the tensors of the 2D image features 106 align with the GCCS ZY-plane, while the tensor channels align with an X-axis defined normal to the XY-plane. To reconcile these differences, a spatial transformation called CDSM is performed. The CDSM block consists of two steps shown as the block 108 and the block 112. Instead of relying on explicit projections or depth estimations of the at least one input image, as is done in these other solutions, the 2D image features 106 identified from the at least one input image are leveraged. Less memory is needed to maintain the 2D image features 106 than the at least one input image themselves.

A CDSM rotation block 108 transforms the 2D feature map into a 3D feature map that is compatible with a BEV grid format. The block 108 is implemented to align the 2D feature tensors with the spatial orientation of the GCCS. This may involve performing quaternion rotations to calculate new indices and scattering input tensor values over the rotated output tensor accordingly. The parameters and order of rotations for the 2D image features 106 are a rotation by 180 degrees around the first dimension (GCCS Z-axis) and then by 90 degrees around the second dimension (GCCS Y-axis). This combined rotation ensures the correct orientation and alignment of the GCCS center with the 3D prediction grid tensors. For example, the 2D image features 106 are passed to CDSM rotation block 108 to match two of the three 3D space representations of potential targets on different locations within the BEV grid 116. Rotated tensors from different scale levels of the FPN are aggregated on the single BEV grid 116 according to their corresponding features at that level. For example, the set of 2D image features 106 are adapted by the block 108 to be a set of 3D image features 110 to the potential targets by applying a CDSM rotation block 108 to the 2D image features 106 that aligns a lateral (Y) axis and a vertical (Z) axis of the 2D image features 106 with, respectively, a tensor height axis and a tensor width axis of a 3D birds-eye-view, which is the BEV grid 116. A CDSM aggregation 112 is applied to the 3D image features 110 to extrapolate depth information for a tensor channel axis that is normal to the tensor width axis and the tensor heigh axis (e.g., along a superimposed depth (X) axis of the 2D image features.

A set of 3D image features 110 are sent to a CDSM aggregation block 112 to generate a set of aggregated 3D features 114 to the potential targets including the depth information extrapolated for the tensor channel axis. This second step involves aggregating the rotated 2D feature maps onto the BEV grid 116. By applying this technique, a correlation between the object distance from the sensor and the scale level at which it is detected is apparent. Therefore, close objects appear larger pixel-wise and are detected on smaller grids, while distant objects appear smaller pixel-wise and are detected on more fine-grained scales. To capture this correlation, various scale feature tensors that cover the camera sensor's field of view are aggregated and applied to the 2D image features 106 based on the objects' distance correlation at each level. For example, the 3D image features 110 are aggregated and grouped into a set of aggregated 3D features 114, which are arranged in a BEV grid 116 or other suitable format for enabling functions related to perception-sensor based object detection.

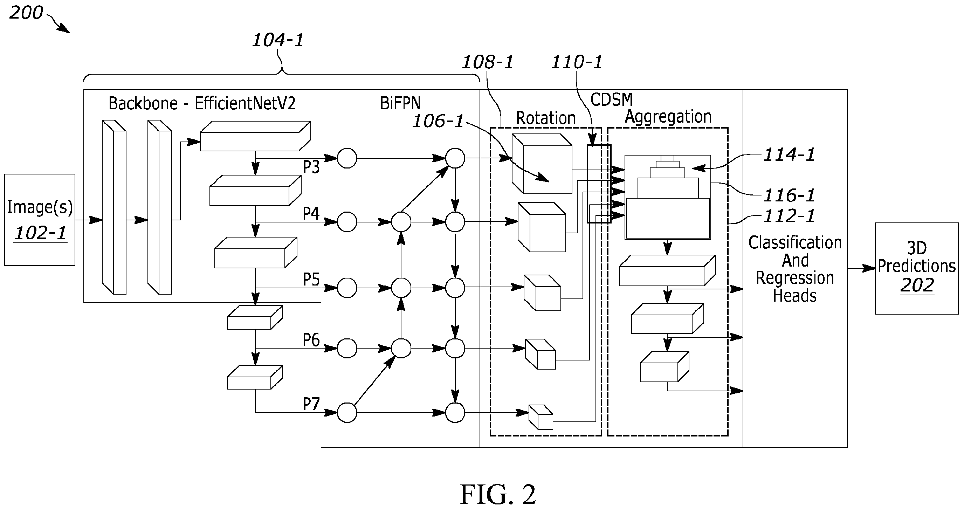

Finally, a set of 2D convolutional layers is applied to the aggregated BEV feature map to refine the 2D image features 106 and obtain additional grid scales in that domain. These refined 2D features 106 are then passed to 3D prediction heads (e.g., prediction heads 202 as shown in Figure 2) of the CDSM rotation block 108 for further processing into the 3D image features 110.

The previously described solutions for 3D object detection differ from the approach taken by the computing system 100. Instead of relying on explicit projections or depth estimations, the 2D image features 106 are leveraged, and the CDSM rotation block 108 is used to adapt them to the 3D domain and the CDSM aggregation block 112 further adapts them for the specific BEV grid 116. In this way, the computing system 100 enables objects to be predicted directly in the tensor 3D space based on the aggregated 3D features 114 derived from the at least one input image, rather than consume extra resources processing the images 102 on an individual or grouped pixel level, rather than a feature level of abstraction as is described herein.

As described below, object detection can be performed after further aggregations with other types of sensor data that is mapped to the same BEV grid 116. For example, beyond monocular object detection with a camera, the CDSM layer provided by the computing system 100 can be adapted to enable low-level sensor fusion of different types of sensor data (e.g., camera and radar). Aspects of the CDSM layer (e.g., the blocks 108 and 112) can be utilized in these and other implementations to shrink a model and/or sensor data set to a more manageable / suitable size for use in an embedded application (e.g., on a vehicle). That is, because no explicit projections or depth estimations are utilized within the computing system 100 and its overall computer model, the computing system 100 may require less memory or less sophisticated processing resources than existing solutions. For example, based on the aggregated 3D features 114, one or more objects associated with the potential targets may be detected. Responsive to determining that at least one of the objects is near a travel path of the vehicle, the vehicle can be controlled based on the information in the BEV grid 116 to avoid a collision with that object.

The CDSM layer of the computing system 100 allows the network to learn a spatial mapping of the 2D image features 106 to apply them directly into the BEV grid 116 as the aggregate 3D features 114. This mapping and aggregation process is guided by the specific way 2D feature tensors from different FPN levels are aggregated onto the BEV grid 116. A main conditioning of the computing system 100 can be performed by using trainable convolutional weights; the weights are adjusted by backpropagation through the network to match the provided 3D targets.

Figure 2 illustrates an example computer model or network implemented on a vehicle system to perform CDSM for monocular object detection. A whole model architecture 200 is presented in Figure 2.

A block 104-1 is illustrated as an example of the block 104, which includes an EfficientNetV2 model that is utilized as the backbone to the architecture 200. The block 104-1 may utilize a model chosen for compatibility with existing 2D image processing architectures, as well as its optimized depth, layer width, and resolution representations at different levels, resulting in fast inference time and satisfactory performance (e.g., for embedded vehicle applications). Official (e.g., predefined) model weights are pretrained on ImageNet as a starting point for training. The backbone generates three feature maps at P3, P4, and P5 levels, corresponding to one eighth (1/8), one sixteenth (1/16), and one thirty-second (1/32) of the size of an input image 102-1.

A second stage of the block 104-1 includes the BiFPN. The BiFPN is described with reference to the EfficientNetV2 model as being employed as the FPN. As shown in Figure 2, the BiFPN of the block 104-1 consists of multiple iterations of complex connections between input feature maps, which aggregate and refine the 2D image features 106-1 in a more intricate manner than standard U-shaped FPNs. The backbone outputs P3-P5 and artificially generated P6 and P7, which use only one sixty-fourth (1/64) or one hundred twenty-eighth (1/128), respectively, of the images 102-1 processed. The 2D image features 106-1 may be output as five associated new feature maps at five different scales.

A single CDSM block includes a CDSM rotation block 108-1 in combination with a CDSM aggregation block 112-1, which are examples of the block 108 and the block 112, respectively. This combination enables the CDSM layer of the architecture 200 to be applied to process image features rather than image pixels and transform potential targets into a BEV grid 116-1 for downstream processing to detect objects associated with the potential targets. For instance, the BiFPN feature maps 106-1 are examples of the 2D image features 106, which being in the 2D image domain, are mapped to the 3D BEV grid space defined by a BEV grid 116-1. This transformation enables the alignment of the 2D image features 106-1 with the desired 3D domain defined by the tensor dimensions (e.g., the tensor heigh, width, channel).

Finally, two separate heads exist at the output of the aggregation block 112-1, referred to as a classification head and the regression head predictions 202. The transformed 3D feature maps 114-1 are processed by these heads to perform the final refinement and generate object detections. For example, 3D predictions 202 are output from the classification head, which predicts objectiveness and class scores for each grid cell anchor, while the regression head predicts the 3D bounding box deltas (center, size, and rotation) relative to the anchors. In some cases, anchors are dynamically generated for each cell of the BEV grid 116-1, resulting in nine anchors per cell using three size scale parameters and three ratio parameters. The anchor centers may also be adjusted by the grid cell position offset. This approach yields a diverse collection of anchors distributed across five parts of a single BEV grid 116-1, or across five different BEV grids 116-1, each different cell sizes. Effectively, the architecture 200 captures a wide range of possible object geometries in the 3D predictions 202. Although object prediction may occur separately on each BEV grid 116-1, the weights of both heads are shared across scales.

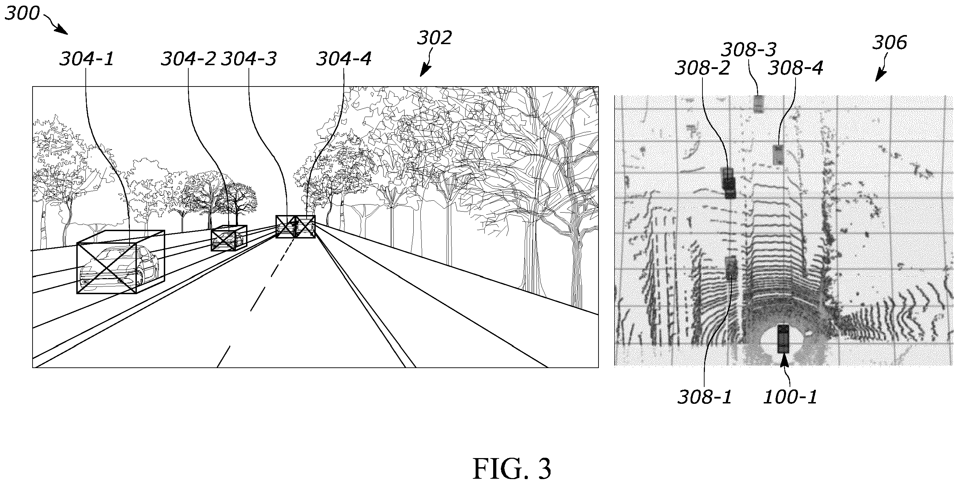

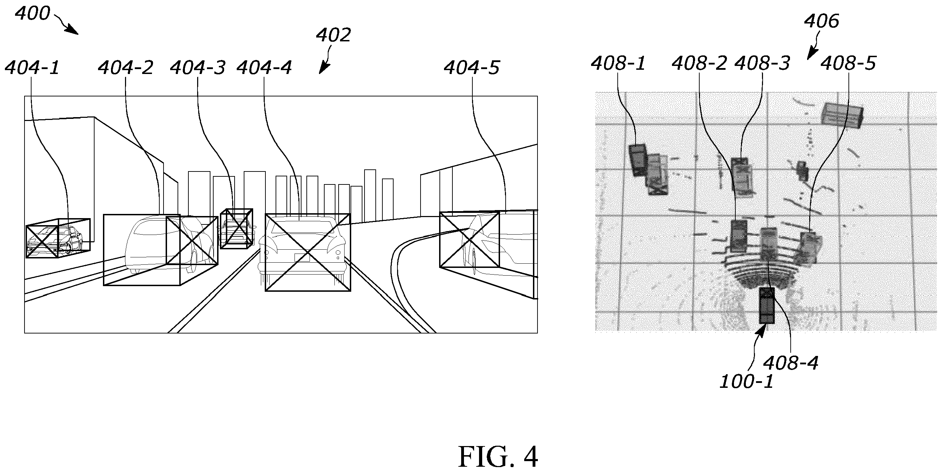

With the output of the 3D predictions 202, object predictions from all levels P3 to P7 may be consolidated into a single list. Downstream tracking functions, e.g., a Non-Max Suppression (NMS) algorithm, may be applied to the 3D predictions 202 to filter out overlapping detections. Figures 3 and 4 illustrate results of performing the described CDSM techniques with different example data sets. The model implemented by the computing system 100-1 may be separately trained on both the KITTI and NuScenes datasets. For example, results with detections on the KITTI dataset are illustrated in Figure 3; results with detections on the NuScenes dataset are shown in Figure 4.

In Figure 3, the computing system 100 and/or the architecture 200 are implemented on a vehicle as a computing system 100-1. In Figure 3, an input image 302 is shown with bounding boxes 304-1 to 304-4 drawn around four different potential targets. A BEV grid 306 is shown with 3D features to potential targets 308-1 to 308-4 corresponding to the objects of the bounding boxes 304-1 to 304-4 overlaid relative to a vehicle position. In Figure 4, an input image 402 is shown with bounding boxes 404-1 to 404-5 drawn around four different potential targets. A BEV grid 406 shows 3D features to potential targets 408-1 to 408-5 corresponding to the objects of the bounding boxes 404-1 to 404-5 overlaid relative a vehicle position.

Related key performance indicators (KPIs) may be calculated on different test samples, for instance, different samples than those used during the training. For example, Table I provides widely used metrics to measure performance of object detection:

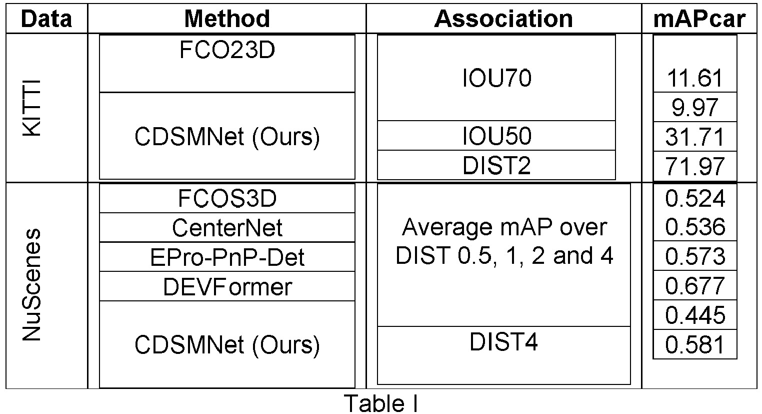

For the KITTI dataset, the suggested IOU70 method from the official ranking is applied, where a label-prediction pair is considered a true positive if the intersection over union (IoU) of the related 3D cuboids exceeds seventy percent (70%). This criterion is a known challenge of feature matching, particularly for monocular camera-only methods, as reflected in the relatively low scores for both FCOS3D and the example CDSMNet method. However, the results between these two methods are closely aligned. Additional KPI calculations may be performed using slightly less stringent association criteria, namely IOU50 and DIST2. The results presented in Figures 3 and 4 demonstrate that the CDSM based model described herein accurately predicts a majority of the objects, and issue with a low mAP score may be attributed to the required precision for demanding association methods.

The NuScenes dataset, overall considered more challenging, employs an official association method based on the distance between label and prediction centers in meters, leading to relatively better mAP scores. To adhere to the official methods, mAP was calculated for four different DIST association thresholds: 0.5m, 1m, 2m, and 4m, with the final metric being the mean of these values. There exists a discernible gap between state-of-the-art solutions and our model; nevertheless, achieving a mAP of approximately 0.5 is a positive outcome considering the simplicity and minimalist design of our approach to such a complex task. Furthermore, similar to the KITTI results, the model achieves comparable performance for lower association criteria, providing evidence that the CDMS transformation solution operates correctly.

In both the images and corresponding 3D views shown in Figures 3 and 4, predicted bounding boxes are highlighted (e.g., using different colors) based on their classification as true positives, false detections, and missed objects. The association can be performed using the DIST2 metric. Additionally, a LiDAR point cloud data set is included in the BEV format for reference.

The NuScenes dataset is considered more challenging than the KITTI dataset, particularly due to the presence of far distant objects labeled. Despite this difficulty, the CDSM based model described herein still manages to predict a majority of these objects correctly, with only some or limited inaccuracies in depth estimations. While the majority of the detections may be correct, there may be some slight inaccuracies in regressed bounding box coordinates and sizes. For example, a distant left car is detected too far from a label, resulting in a false detection. Although a prediction in the input image 302 and input image 402 appear to match the objects in the BEV grid 306 and 406, the estimated depth in some parts of the 3D space may be incorrect.

Table II presents some more essential KPIs, including number of parameters, floating point operations, and GPU memory required for inferences.

**Table II**

| **Model** | **#parameters** | **FLOPs** | **Memory** | **#cameras** |
|---|---|---|---|---|
| FCOS3D | 52.5M | 2008.2G | 8GB | 6 |
| BEVFormer | 68.7M | 1303.5G | 20 GB | 6 |
| CDSMNet (Ours) | 30M | 65G | 1,20 GB | 1 |
| Base 2D model | 24M | 39G | 1.01 GB | 1 |

Per the Table II, even when considering the theoretical performance of multi-view approaches from a single camera view perspective, the CDSM model is surpassed by a large margin in terms of resource usage. This can be attributed to the small input image size (e.g., using the 2D image features instead of the image pixel information in its entirety) and the simplicity of the CDSM blocks 108 and 112. Nevertheless, the CDSM model achieves competitive results that enable its adoption in a wider range of vehicles and embedded systems with less expensive and less powerful onboard computer systems.

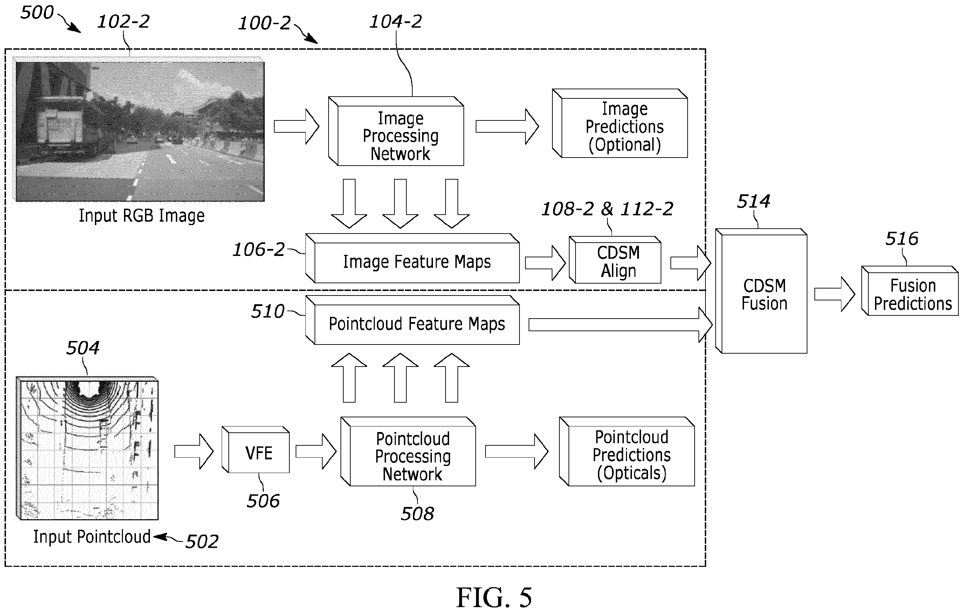

Figure 5 illustrates an example of a CDSM computer model 500 for low-level sensor fusion applications. For instance, vehicles often use multiple sensor types (e.g., radar, lidar, camera, ultrasonic) to perceive objects that are threat for collision when driving. The CDSM techniques described above may be adapted to enable 3D image features to be presented alongside other types of 3D sensor features, which are aggregated on a shared BEV grid with respect to the vehicle. The CDSM computer model 500 that is illustrated in Figure 5 includes two parts that feed a CDSM fusion output. The CDSM computer model 500 represents a multi-part setup concept in this fusion approach. Separate network architectures are employed to initially process camera images and point cloud data (e.g., radar, lidar) separately. The CDSM computer model 500 includes a CDSM layer 100-2, which is an example of the CDSM layer from the computing system 100. The CDSM layer 100-2 receives an image 102-2 from a camera (e.g., 2D camera). In addition, the model includes a point cloud or non-image-based feature extraction layer 504. The point cloud layer 504 may receive point cloud data as input from a radar or lidar sensor on a vehicle.

The layer 100-2 and the layer or the network 502 may be separate neural networks or separate subnets of a single network in the CDSM computer model 500. In some examples, these layers 100-2 and 502 may be different neural network layers that feed 3D features extracted from multiple sensors to a common sensor fusion processing pipeline that uses a common BEV grid for reference. The image 102-2 (e.g., the camera input) is processed in the 2D image domain, while the point cloud data is processed in an enhanced 3D space defined by the BEV grid. For example, the layer 502 includes a Voxel Feature Extractor (VFE) 506, and a point cloud processing network 508, which are used to output a plurality of point cloud, 3D feature maps 510.

Both neural networks 100-2 and 502 may generate output and predictions in their respective domains. However, to facilitate low-level sensor fusion, a CDSM alignment block (e.g., including a block 108-2 and a block 112-2) feeds a CDSM fusion block 514 that fuses the 3D feature maps from intermediate layers of the networks 100-2 and 502 into a unified output of fusion predictions 516 in the 3D space of the BEV grid.

A primary challenge with fusing feature maps with origins in completely distinct domains (e.g., 2D camera and 3D BEV) can be overcome by leveraging identifiable features, which after spatial alignment of their feature maps prior to fusion using the single CDSM fusion block 514, enables more efficient matching of features from the different sets of sensor data. Therefore, the CDSM fusion block 514 is used to align the spatial information present in the different domains of sensor data (e.g., obtained from camera images and radar point clouds). Image predictions and/or point cloud predictions are optionally provided depending on application. For example, some functions may perform processing on the input image 102-2 and/or the point cloud data 504 directly, without waiting for the fusion predictions 516.

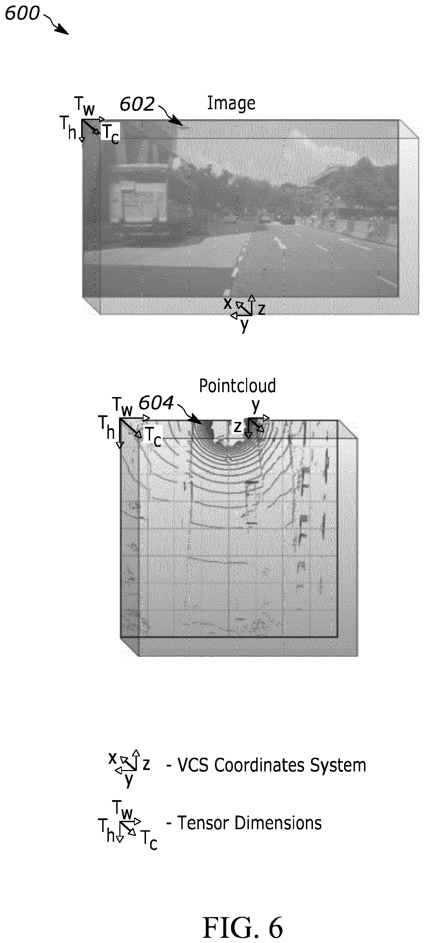

Figure 6 illustrates an input 600 to the CDSM computer model 500. The input 600 includes an image 602, which is an example of the images 102, and a radar point cloud 604 as an example of the point cloud data. Figure 6 illustrates how, initially, the feature maps derived from the input 600 from intermediate layers of each network 100-2 and 502 are misaligned. CDSM can be used to align and fuse these sets of 3D features into a common BEV grid associated with the fusion predictions 516. After each sensor domain is CDSM aligned or already aligned to the common BEV grid, the CDSM fusion block 514 can apply further CDSM techniques to aggregate and output the fusion predictions 516 derived from their combined sensor outputs.

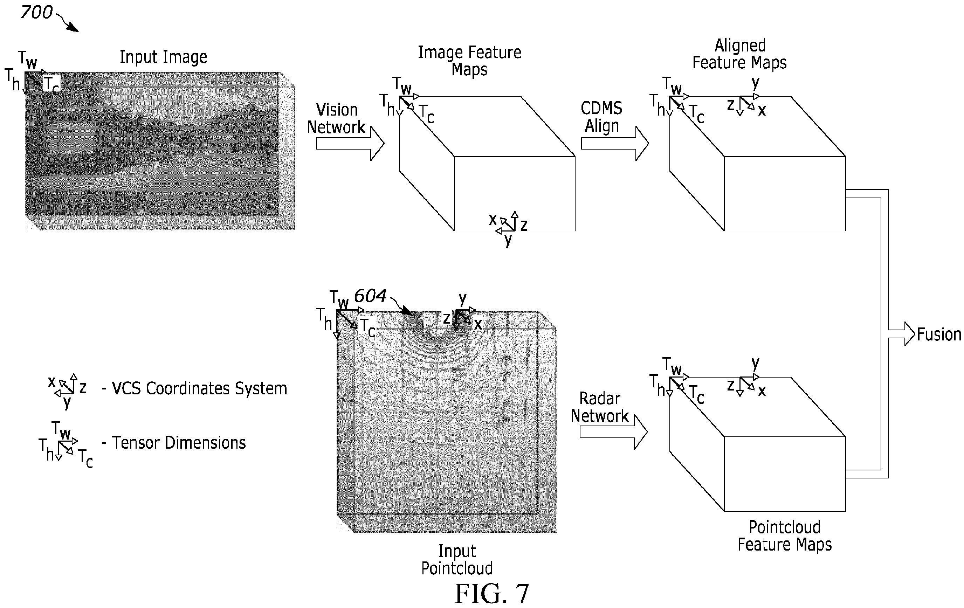

Figure 7 illustrates additional concepts related to CDSM fusion techniques described herein for low-level sensor fusion of sensor data from different domains. An example of the CDSM computer model 500 is provided by a neural network 700. The neural network 700 includes a CDSM layer and a radar network point cloud layer. The CDSM layer outputs feature maps of a 2D image, which are aligned to a BEV associated with a vehicle, and that is aligned to point cloud feature maps output from the radar layer.

Before information from both the radar and camera views is fused, their tensor dimensions are aligned in the neural network 700 to match their spatial orientation in a vehicle coordinate system (e.g., the BEV grid).

To accomplish this, a custom CDSM rotation layer is implemented to perform the operation. The final rotation matrix is calculated using a chain of quaternion rotations and applied to tensor indexes through matrix multiplication. Additionally, the new indexes are shifted by a calculated offset to align the tensor index (0,0,0) since certain rotations may yield negative index values. Subsequently, values from the old indexes are gathered and scattered across the rotated output tensor based on the new indexes. The CDSM rotation layer may be utilized to align the camera and radar feature maps tensors in relation to a vehicle coordinate system (VCS). For example, the rotations applied to the camera feature tensors may be as follows: firstly, a 180-degree rotation around the first dimension (VCS Z-axis), followed by a 90-degree rotation around the second dimension (VCS Y-axis). A correctly chosen combination and order of rotation operations may not only ensure that both tensors have the same orientation with respect to the VCS but also align the centers of their VCS in the same center position. Achieving such alignment may not be possible with any combination of input tensor dimension permutations and/or transpositions.

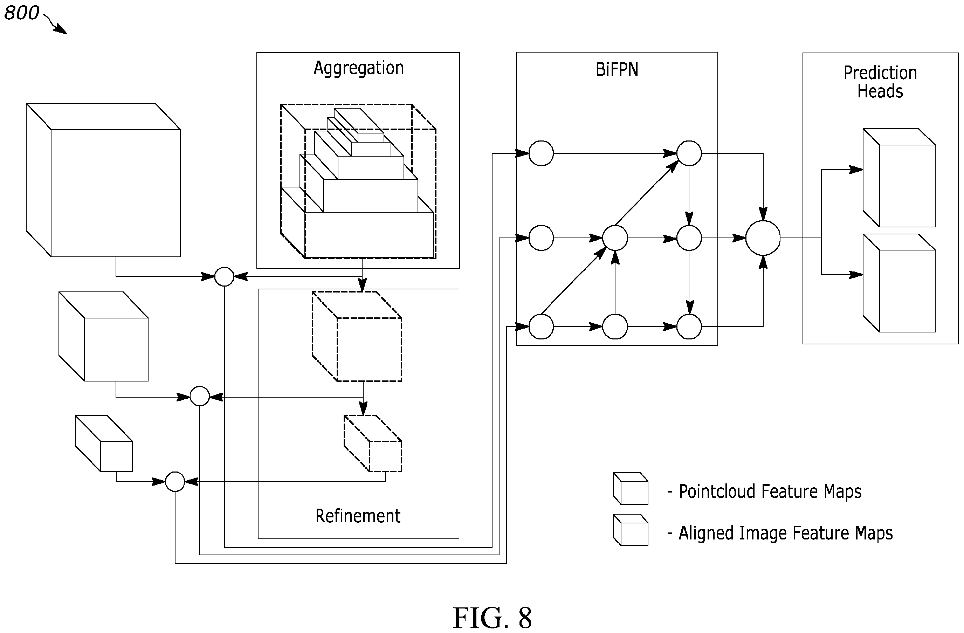

Figure 8 illustrates a network 800 that implements the CDSM fusion block and fuses the aligned CDSM features from different sensors into a fused output. The CDSM fusion block can be divided into three stages: aggregation, BiFPN processing, and prediction head evaluation. The network 800 enables the low-level merging of information from both camera and radar views.

Firstly, camera feature maps from different scale levels are taken and aggregated onto a single BEV map. This is done to detect objects of various sizes in the camera plane. Due to perspective mapping, these feature maps correspond to specific regions in the BEV domain at a certain distance from the camera sensor. The distance ranges for features from each scale level are determined using the GradCAM visualization technique mentioned above. Additionally, during the aggregation of feature maps, consideration is given to the relation between the camera sensor's field of view and the output BEV grid. This ensures that the features are not placed in a 3D space that is not visible in the image.

After the aggregation, a features refinement step is performed. This step involves several 2D convolutional layers in the BEV domain. Similar to the concept of the backbone, the features are processed from detailed to more general, creating smaller grid representations of the same BEV area. This enables the extraction of relations between different feature maps throughout the training process in an end-to-end manner, instead of manually invoking them onto the model. It also generates higher-level features that capture larger areas in the BEV.

Finally, the result of the refinement step is a set of three different BEV grid feature maps from the camera sensor in a 3D domain, which can be directly fused with point cloud feature maps. The fusion of camera and point cloud features becomes a relatively simple task now, as they have been converted into the same coordinate system. The aggregated and refined camera feature maps in BEV correspond spatially to those obtained during radar data processing. During the architecture design, compatible grid sizes are ensured so that both grid tensors can be concatenated together, stacking camera and radar features for each grid cell along the channel dimension. Another BiFPN block is applied to the concatenated feature maps at different levels to further combine the information from both sensors into a single 3D internal representation. This representation is used in the prediction heads to generate the final 3D object predictions.

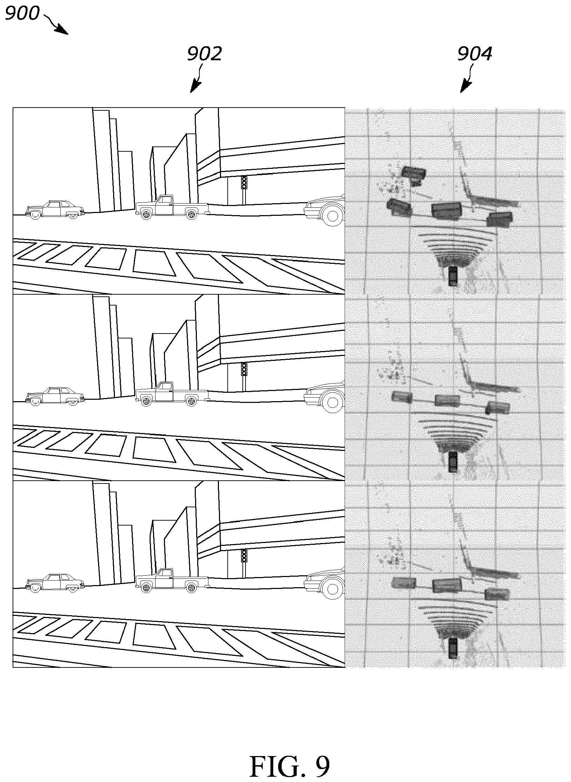

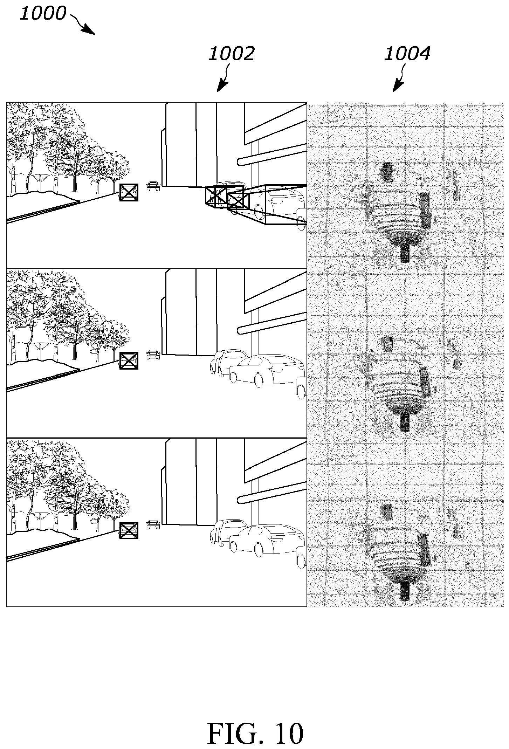

Figures 9 and 10 illustrate example results of performing CDSM fusion in accordance with the described techniques. Results 900 are illustrated in Figure 9, and results 1000 are drawn in Figure 10; the results 900 and 1000 each depict, respectively from top to bottom, results of a camera-only test, a radar-only test, and a CDSM fusion test. In obtaining the results 900 and 1000, a vehicle system or simulation executes three different computer models that are separately trained and evaluated for performance using the NuScenes dataset. Each shows, from top to bottom, a 2D image side by side with a corresponding 3D BEV that is populated with object predictions of one of three different models: a camera only model, a radar only model, and a CDSM fusion model like that described above (e.g., in Figures 5, 6, 7, and 8). Each model was trained on the NuScenes dataset and then evaluated separately based on one or more KPIs available, including official rankings (e.g., NuScenes rankings), for comparison with other state of the art systems used in 3D object detection.

The results 900 include an image 902 and a corresponding 3D BEV 904 representation generated by each separate model that is tested. LiDAR point cloud data is shown added to the 3D BEV 904 for further reference in the BEV view. Table III includes a comparison between camera only, radar only, and different fusion models, including the example CDSM fusion model, when processing the image 902 and/or 3D radar data to derive the 3D BEV 904.

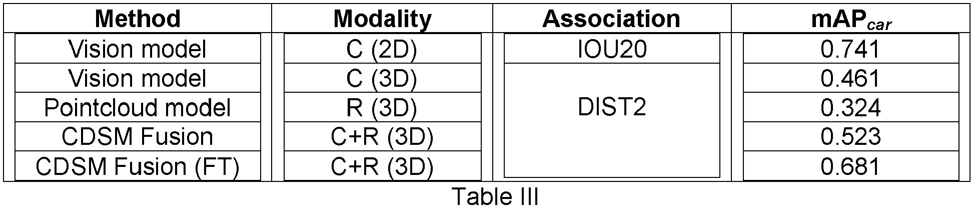

The two different modalities are labeled in the Table III as C for camera, R for radar, or C+R for camera and radar together.

The results 1000 include an image 1002 and a corresponding 3D BEV 1004 representation generated by each separate model that is tested, for a different corner case than that tested in Figure 9. LiDAR point cloud data is shown added to the 3D BEV 1004 for further reference in the BEV view. Table IV includes a comparison between lidar only, camera only, and various fusion models including the example CDSM fusion model, which process camera and radar in combination.

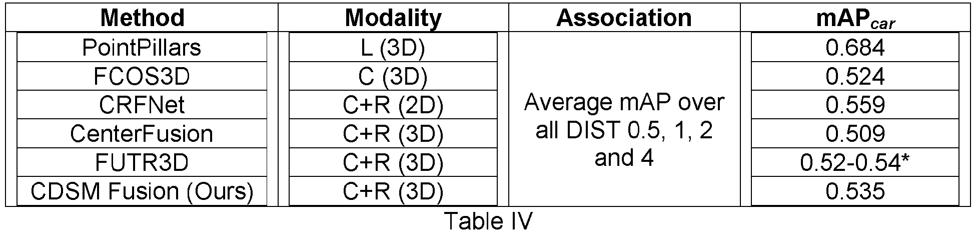

When processing the image 1002 and/or 3D radar data, these three different modalities are labeled C for camera, R for radar, L for lidar, or C+R for camera and radar together. Even when single-sensor models fail to predict all objects in the scene, the different fusion models utilizes both sensors' data to improve upon each of them. The CDSM fusion model described herein achieve state of the art performance comparable to more complex systems that are too computing resource intensive for embedded (e.g., vehicle) applications.

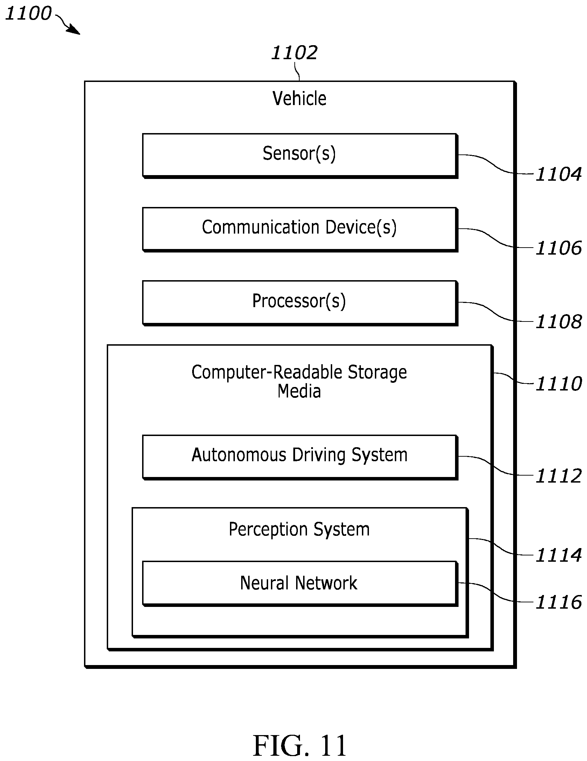

Figure 11 illustrates an example configuration 1100 of a vehicle 1102 that may implement the techniques described herein to perform CDSM for monocular 3D object detection and/or low-level sensor fusion. The vehicle 1102 includes one or more sensors 1104, one or more communication devices 1106, one or more processors 1108, and computer-readable storage media (CRM) 1110. The vehicle 1102 is further equipped with an autonomous driving system 1112 that relies on object information from a perception system 1114. The perception system 1114 includes a neural network 1116 trained to perform the described techniques related to CDSM alignment and CDSM fusion. The neural network 1116 may be divided into several layers, where each upper layer uses information provided by lower layers. At least one of the layers of the neural network 1116 includes the computing system 100 and/or the architecture 200. The CRM 1110 stores instructions associated with the autonomous driving system 1112, the perception system 1114, and the neural network 1116.

The sensors 1104 provide sensor data to the neural network 1116. The sensors 1104 may be mounted to, or integrated within, any portion of the vehicle 1102 to provide an instrumented field of view. The sensors 1104 produce raw information (e.g., low-level information as opposed to higher object-level information) about the vehicle 1102 and the physical surrounding environment. As used herein, the sensors 1104 may include camera systems, radar systems, lidar systems, or ultrasonic systems to detect and track objects in the environment surrounding the vehicle 1102 and detect objects within a drivable area surrounding the vehicle 1102. Radar systems may provide information regarding the range, radial velocity, and azimuth angle of nearby objects. Lidar systems and ultrasonic systems may provide a map of reflecting objects and indicate range information associated with those objects. Camera systems may be used to provide range information or to determine object classes associated with nearby objects.

The sensors 1104 may provide sensor data regarding objects, including 2D camera images, radar and/or lidar point cloud data, or other forms of low-level or raw perception sensor data. The sensor data can, for example, indicate a relative position (e.g., range and lateral positioning), heading, or speed relative to the vehicle 1102 for the objects, including stationary objects that make up a free space boundary. In some cases, the sensors 1104 include combinations of different types of sensors, such as a radar system and a camera, which provide a larger instrument field-of-view or improved detection of objects over using just one type of sensor.

The perception system 1114 may include a vehicle state estimator and an environment perception system. The vehicle state estimation layer utilizes raw data from the sensors 1104 to obtain accurate information about the vehicle 1102, including its position, speed, orientation (e.g., yaw), or yaw rate. The environment perception layer also uses data from sensors 1104 to provide information about the surrounding environment, both the dynamic world (e.g., moving cars and pedestrians) and the stationary world (e.g., guardrails). The topmost layers include the autonomous driving system 1112 that provide features and functions that support daily driving (e.g., lane keeping assistance) and the neural network 1116 that is responsible for processing the sensor data from the sensors 1104 to detect objects and output bounding boxes relative the 3D space (e.g., the GCCS) defined by the autonomous driving system 1112; a safe driving path from point A to point B can be inferred from the information output by the neural network 1116 to avoid colliding with any of the detected objects.

The communication devices 1106 include any radio or transceiver configured to send or receive signals for a vehicle. The communication devices 1106 may include telecommunication radios, satellite transceivers, and the like.

The processors 1108 (e.g., an energy processing unit or electronic control unit) may be a microprocessor or a system-on-chip. The processors 1108 execute instructions stored in CRM 1110. For example, the processors 1108 may process sensor data from the sensors 1104 by inputting an image from a 2D camera and transforming that input into a set of 3D features that are aggregated on a BEV grid. These 3D features can be combined using CDSM fusion to determine combined features identified by the sensors 1104, each relative a same frame of reference to the vehicle 1102 that is traveling in free space. From the 3D features, the perception system 1114 or other part of the neural network 1116 may be operable to identify characteristics (e.g., relative positioning, range, and predicted tracks) and classifications of observable objects in the surrounding environment. The processor 1108 may then control the operation of the autonomous driving system 1112, the perception system 1114, and the neural network 1116 to cause the vehicle 1102 to navigate the environment and avoid potential collisions or unsafe driving. For example, the processor 1108 may control, based on data from the sensors 1104, the perception system 1114 to request information about objects and their locations and sizes to determine a navigation path for the vehicle 1102 to avoid objects.

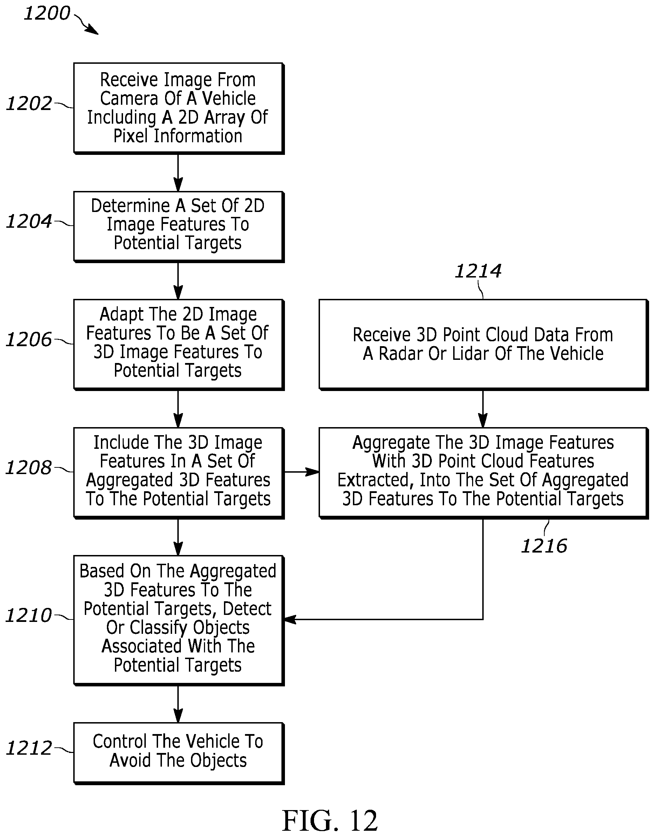

Figure 12 illustrates an overview of techniques associated with performing CDSM for monocular 3D object detection and/or low-level CDSM sensor fusion. Figure 12 illustrates a process 1200 that is described in the context of being performed on the vehicle 1102 utilizing the computing system 100, the architecture 200, the CDSM computer model 500, the neural network 700, and the network 800. For example, the processors 1108 may be configured to execute a CDSM 2D image feature extractor and aggregator that outputs 3D features for use in a BEV processing function (e.g., assisted driving). For ease of description, the process 1200 is shown optionally used as entry into a CDSM fusion algorithm. The process 1200 may be performed without executing steps of the CDSM fusion algorithm (e.g., as an example implementation of monocular 3D object detection). When steps 1214 and 1216 are performed as shown providing inputs to step 1210, the process 1200 is an example of low-level CDSM sensor fusion, which builds upon the CDSM transformations of the input image to generate a more comprehensive view of all 3D features, which can then be used to classify and/or detect objects.

At step 1202, at least one input image is received from a camera of a vehicle including a 2D array of pixel information of the physical environment. For example, the input image 102 is provided to the computing system 100 (e.g., from a camera of the sensors 1104).

At step 1204, from the 2D array of pixel information of the input image, a set of 2D image features to potential targets in the physical environment is determined. For example, the block 104 produces the 2D image features 106, which include less information than the 2D array of pixel information. The 2D image features 106 may characterize portions of the pixel array, but not include red, green, blue color values; t instead they provide a 2D image feature map indicating potential targets and their relative size and position from the image 102.

At step 1206, the set of 2D image features are adapted to be a set of 3D image features to the potential targets. For example, the block 108 applies a CDSM rotation block 108 to the 2D image features 106 that aligns a lateral axis and a vertical axis of the 2D image features 106 with, respectively, a tensor height axis and a tensor width axis of a 3D BEV grid 116. The block 112 then applies a CDSM aggregation 112 to extrapolate depth information for a tensor channel axis that is normal to the tensor width axis and the tensor heigh axis, which produces the 3D image features 110.

At step 1208, a set of aggregated 3D features to the potential targets is generated including the depth information extrapolated for the tensor channel axis. For example, the aggregated 3D features 114 are produced by aggregating the 3D image features 110 based on their extrapolated depth information to fit the BEV grid 116.

At step 1210, based on the aggregated 3D features, one or more objects associated with the potential targets are detected and/or classified. For example, another vehicle may be detected from the BEV grid 116.

At step 1212, the vehicle is controlled to avoid collisions with the objects. For example, responsive to determining that the other vehicle is included in the at least one of the objects, and is near a travel path of the vehicle, the processors 1108 may control the vehicle 1102 to avoid a collision with that object.

At step 1214, 3D point cloud data is received from a radar or lidar of the vehicle. For example, the sensors 1104 include a radar configured to output radar data that is processed by the perception system 1114. Features are extracted from the 3D point cloud data for aggregation onto the BEV grid 116.

At step 1216, the 3D image features are aggregated with the 3D point cloud features to generate a fused set of aggregated 3D features to the potential targets. For example, the aggregated 3D features 114 are produced by aggregating the 3D image features 110 based on their extrapolated depth information to fit the BEV grid 116 in combination with the 3D feature maps 510 output from the CDSM computer model 500. In this way, the two sensor modalities can be used in combination for object classification and/or object detections that use the BEV grid 116.

The steps 1210 and 1212 may be performed in response to the execution of the step 1216. For example, another vehicle may be detected from the BEV grid 116 with greater accuracy from utilizing information derived from 3D features found in the input image 102 and the point cloud data. The vehicle 1102 is controlled to avoid collisions with the objects near a travel path.

The techniques according to the present invention may be implemented in terms of a computer program which may be executed on any suitable data processing device comprising means (e.g., a memory and one or more processors operatively coupled to the memory) being configured accordingly. The computer program may be stored as computer-executable instructions on a non-transitory computer-readable medium.

Embodiments of the present disclosure may be realized in any of various forms. For example, in some embodiments, the present invention may be realized as a computer-implemented method, a non-transitory computer-readable storage medium, or a computer system.

In some embodiments, a non-transitory computer-readable storage medium may be configured so that it stores program instructions and/or data, where the program instructions, if executed by a computer system, cause the computer system to perform a method, e.g., any of the techniques described herein, or, any combination of the techniques described herein, or any subset of any of the techniques described herein, or any combination of such subsets.

In some embodiments, a computing device may be configured to include a processor (or a set of processors) and a memory medium, where the memory medium stores program instructions, where the processor is configured to read and execute the program instructions from the memory medium, where the program instructions are executable to implement any of the various techniques described herein (or, any combination of the techniques described herein, or, any subset of any of the techniques described herein, or, any combination of such subsets). The device may be realized in any of various forms.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein.

While various embodiments of the disclosure are described in the foregoing description and shown in the drawings, it is to be understood that this disclosure is not limited thereto but may be variously embodied to practice within the scope of the following claims. From the foregoing description, it will be apparent that various changes may be made without departing from the scope of the disclosure as defined by the following claims.

## Claims

1. A computer-implemented method of a vehicle system for performing Cross-Domain Spatial matching (CDSM) for monocular object detection in 3D free space of a physical environment surrounding a vehicle, the method comprising:
receiving into an image processing network, from a camera of the vehicle, at least one input image including a 2D array of pixel information of the physical environment;
determining, from the 2D array of pixel information of the input image, a set of 2D image features of potential targets in the physical environment;
transforming the set of 2D image features into a set of 3D image features of the potential targets by applying a CDSM rotation to the 2D image features that aligns a lateral axis and a vertical axis of the 2D image features with, respectively, a tensor height axis and a tensor width axis of a 3D birds eye view (BEV) grid, and by applying a CDSM aggregation to the 3D image features to extrapolate depth information for a tensor channel axis that is normal to the tensor width axis and the tensor height axis;
generating a set of aggregated 3D features to the potential targets including the depth information extrapolated for the tensor channel axis; and
detecting, based on the aggregated 3D features, one or more objects associated with the potential targets.

2. The computer-implemented method according to claim 1, further comprising:
determining that at least one of the one or more objects lies along a travel path of a vehicle.

3. The computer-implemented method according to claim 2, further comprising:
controlling the vehicle to avoid a collision with the at least one of the one or more objects.

4. The computer-implemented method according to claim 1, 2 or 3, wherein receiving the at least one input image includes centering a cartesian global camera coordinate system (GCCS) on a camera sensor field of view of the camera.

5. The computer-implemented method according to claim 4, wherein the GCCS includes an X-axis defined along a vehicle travel path and Y-axis that is orthogonal to the X-axis, the Y-axis defining a width of the vehicle, and a Z-axis that define the tensor channel axis,
wherein in particular the tensor height axis corresponds to the X-axis of the GCCS and the tensor width axis corresponds to the Y-axis of the GCCS.

6. The computer-implemented method according to claim 5, wherein applying the CDSM rotation to the 2D image features includes aligning the 2D image features with the GCCS by rotating the 2D image features about the Z-axis a first distance and rotating the GCCS about the Y-axis a second distance.

7. The computer-implemented method according to claim 6, further comprising:
applying 2D convolutional layers to the BEV grid to generate refined 2D image features; and
passing the refined 2D image features to 3D prediction head to process the refined 2D image features into 3D image features.

8. A computer system for performing Cross-Domain Spatial matching (CDSM) for monocular object detection in 3D free space of a physical environment surrounding a vehicle, the computer system comprising:
an image processing network for receiving into a network backbone, from a camera of the vehicle, at least one input image including a 2D array of pixel information of the physical environment;
a bidirectional feature pyramid network for determining, from the 2D array of pixel information of the input image, a set of 2D image features of potential targets in the physical environment; and
a CDSM system for transforming the set of 2D image features to a set of 3D image features of the potential targets by applying a CDSM rotation to the 2D image features that aligns a lateral axis and a vertical axis of the 2D image features with, respectively, a tensor height axis and a tensor width axis of a 3D birds eye view (BEV) grid, and by applying a CDSM aggregation to the 3D image features to extrapolate depth information for a tensor channel axis that is normal to the tensor width axis and the tensor height axis.

9. The computer system according to claim 8, wherein the CDSM system generates a set of aggregated 3D features of the potential targets including the depth information extrapolated for the tensor channel axis, and detects, based on the aggregated 3D features, one or more objects associated with the potential targets,
in particular further comprising: a point cloud processing network connected to at least one of a lidar system and a radar system, the point cloud processing system receiving from the at least one of the lidar system and the radar system, 3D point cloud data representing a physical environment around the vehicle.

10. The computer system according to claim 9, further comprising: a voxel feature extractor (VFE) coupled to the point cloud processing network, the point cloud processing network and the VFE generating a plurality of 3D feature maps of the physical environment around the vehicle,
wherein the CDSM system in particular fuses the 2D image features with the 3D feature maps in a CDSM fusion block to generate the set of aggregated 3D features of the potential targets.

11. The computer system according to claim 10, wherein the CDSM system generates a unified output prediction in the BEV grid of the potential targets, and/or
wherein the CDSM system aligns spatial information in a first domain representing the 2D image features with spatial information in a second domain in a CDSM alignment block, that is distinct from the first domain, representing the 3D feature maps to fuse the 2D image features with the 3D feature maps.

12. The computer system according to any one of claims 9 - 11, wherein the CDSM system determines that at least one of the one or more objects associated with the potential targets lies along a travel path of a vehicle,
wherein the CDSM system in particular controls the vehicle to avoid a collision with the at least one of the one or more objects.

13. The computer system according to claim 12, wherein the CDSM system centers cartesian global camera coordinate system (GCCS) on a camera sensor field of view of the camera when receiving the at least one input image into the network backbone.

14. The computer system according to claim 13, wherein the CDSM system defines the GCCS as an X-axis extending along a vehicle travel path and Y-axis defining a width of the vehicle that is orthogonal to the X-axis, and a Z-axis that defines the tensor channel axis.

15. The computer system according to claim 14, wherein the tensor height axis in the CDSM corresponds to the X-axis of the GCCS and the tensor width axis in the CDSM corresponds to the Y-axis of the GCCS.
